# EUROPÄISCHE PATENTANMELDUNG

(11) **EP 1 923 934 A1**
(43) Veröffentlichungstag der Anmeldung: **21.05.2008**
(21) Anmeldenummer: 06023611.4
(22) Anmeldetag: 14.11.2006
(51) Int. Cl.: H01M 4/24, H01M 10/40, H01M 2/14

(54) **Wiederaufladbare elektrochemische Batteriezelle**

(71) Anmelder: Fortu Intellectual Property AG, 4020 Basel (CH)
(72) Erfinder: Hambitzer, Günther, 76327 Pfinztal (DE)
(74) Vertreter: Pfeifer, Hans-Peter

(57) **Zusammenfassung**

Die Erfindung betrifft eine wiederaufladbare elektrochemische Batteriezelle mit einer negativen Elektrode, einem Elektrolyten und einer positiven Elektrode. Die negative Elektrode weist ein elektronisch leitendes Substrat (12) auf, an dem beim Laden der Zelle ein aktives Metall (24) der negativen Elektrode elektrolytisch abgeschieden wird. Eine poröse Struktur (13), die die aktive Masse (17) der positiven Elektrode enthält, ist derart in der Nachbarschaft des Substrats (12) der negativen Elektrode (5) angeordnet, dass das beim Laden der Zelle (3) abgeschiedene aktive Metall (17) der negativen Elektrode in die Poren (14) der die aktive Masse der positiven Elektrode enthaltenden porösen Struktur (13) eindringt und dort, zumindest teilweise in metallischer Form, weiter abgeschieden wird.

## Beschreibung

Die Erfindung betrifft eine, vorzugsweise nichtwässrige, wiederaufladbare elektrochemische Batteriezelle mit einer negativen Elektrode, einem Elektrolyten und einer positiven Elektrode, sowie einem Speicher zum Speichern von aktivem Metall, das beim Laden der Zelle aus der Elektrodenreaktion an der negativen Elektrode resultiert.

Die Erfindung richtet sich insbesondere auf eine Batteriezelle, bei der das aktive Metall (dessen Oxidationszustand beim Laden und Entladen der Zelle infolge der an der negativen Elektrode ablaufenden Elektrodenreaktion geändert wird) ein Alkalimetall, Erdalkalimetall oder ein Metall der zweiten Nebengruppe des Periodensystems ist, wobei Lithium besonders bevorzugt ist. Nachfolgend wird ohne Beschränkung der Allgemeinheit auf Lithium als aktives Metall der negativen Elektrode Bezug genommen.

Der im Rahmen der Erfindung verwendete Elektrolyt basiert vorzugsweise auf SO₂. Als "auf SO₂ basierende Elektrolyten" (SO₂ based electrolytes) werden Elektrolyten bezeichnet, die SO₂ nicht nur als Zusatz in geringer Konzentration enthalten, sondern bei denen die Beweglichkeit der Ionen des Leitsalzes, das in dem Elektrolyten enthalten ist und den Ladungstransport bewirkt, zumindest teilweise durch das SO₂ gewährleistet wird. Im Falle einer Alkalimetallzelle wird als Leitsalz vorzugsweise ein Tetrahalogenoaluminat des Alkalimetalls, beispielsweise LiAlCl₄, verwendet. Eine wiederaufladbare Alkalimetallzelle mit einem auf SO₂ basierenden Elektrolyten wird als wiederaufladbare Alkalimetall-SO₂-Zelle bezeichnet.

Die Erfindung bezieht sich jedoch auch auf Zellen mit anderen Elektrolyten, die andere Leitsalze (z.B. Halogenide, Oxalate, Borate, Phosphate, Arsenate, Gallate) und andere Lösungsmittel enthalten, die die Beweglichkeit der Ionen gewährleisten. Dies können anorganische Lösungsmittel (beispielsweise Sulfurylchlorid, Thionylchlorid), organische Lösungsmittel (beispielsweise Ether, Ketone, Carbonate, Ester) und ionische Flüssigkeiten (ionic liquids) sein. Auch Mischungen der genannten anderen Leitsalze und Lösungsmittel miteinander sowie mit den vorstehend genannten bevorzugten Leitsalzen und Lösungsmitteln können verwendet werden.

Bei Batteriezellen ist die erforderliche Sicherheit ein wichtiges Problem. Bei vielen Zelltypen kann insbesondere eine starke Erwärmung zu sicherheitskritischen Zuständen führen. Es kann vorkommen, daß das Zellgehäuse platzt oder zumindest undicht wird und schädliche gasförmige oder feste Substanzen austreten oder sogar ein Brand entsteht.

Besonders kritisch sind Batteriezellen, bei denen ein starker Temperaturanstieg im Zellinnenraum dazu führt, daß in verstärktem Umfang exotherme Reaktionen stattfinden, die ihrerseits zu einem weiteren Anstieg der Temperatur führen. Dieser selbstverstärkende Effekt wird als "thermal runaway" bezeichnet.

Batteriehersteller versuchen, durch elektronische, mechanische oder chemische Mechanismen den Lade- bzw. Entladestromkreis so zu kontrollieren, daß der Stromfluß unterhalb einer kritischen Temperatur unterbrochen wird, so daß kein "thermal runaway" auftreten kann. Hierzu werden beispielsweise drucksensible mechanische oder temperatursensible elektronische Schalter integriert.

Um die mit einer Ansammlung von Lithium in ungebundener (metallischer) Form verbundenen Risiken zu vermeiden, werden bei kommerziell erhältlichen Alkalimetall-Batteriezellen, insbesondere Li-Ionen-Zellen, Graphit-Interkalationselektroden als negative Elektroden verwendet. Das Lithium, welches beim Laden der Zelle aus der Elektrodenreaktion an der negativen Elektrode (durch Aufnahme eines Elektrons) resultiert, wird bei Li-Ionen-Zellen in das Schichtgitter des Graphits eingelagert. Lithium-Ionen-Zellen enthalten deshalb im Normalbetrieb keine Ansammlungen von metallischem Lithium.

Trotz dieser und anderer Maßnahmen ergeben sich vielfach Sicherheitsprobleme. Beispielsweise ist es vorgekommen, dass tragbare Computer als Folge eines "thermal runaway" der darin eingebauten Lithium-lonen-Zellen in Flammen aufgegangen sind. Gemäß einer Publikation vom Juli 2006 sind seit dem Jahr 2000 1,6 Millionen Lithium-Batterien wegen potentieller Sicherheitsprobleme von ihren Herstellern zurückgerufen worden und bei der zuständigen US-Behörde (Product Safety Commission) liegen mehr als 80 Berichte vor, nach denen Benutzer dadurch verletzt wurden, dass ihre tragbaren Telefone Feuer fingen oder explodiert sind.

Trotz dieser Sicherheitsprobleme sind Alkalimetallzellen von großer praktischer Bedeutung, insbesondere weil sie sich durch eine hohe Zellspannung sowie eine hohe Energiedichte (elektrische Kapazität je Volumeneinheit) und hohe spezifische Energie (elektrische Kapazität je Gewichtseinheit) auszeichnen.

Auf dieser Grundlage liegt der Erfindung das Problem zugrunde, Batteriezellen, insbesondere Alkalimetallzellen hinsichtlich Leistungsdaten (Energiedichte, Leistungsdichte) bei gleichzeitig sehr guten Sicherheitseigenschaften weiter zu verbessern.

Dieses technische Problem wird durch eine wiederaufladbare Batteriezelle der einleitend erläuterten Art gelöst, bei der die Zelle eine poröse Struktur enthält, in der die aktive Masse der positiven Elektrode enthalten ist und die derart in der Nachbarschaft eines elektronisch leitenden Substrats der negativen Elektrode angeordnet ist, dass mindestens ein Teil des aus der Elektrodenreaktion an der negativen Elektrode resultierenden aktiven Metalls in die Poren der die aktive Masse der positiven Elektrode enthaltenden porösen Struktur eindringt und dort gespeichert wird, wobei die Speicherung des aktiven Metalls in den Poren der die aktive Masse der positiven Elektrode enthaltenden porösen Struktur zumindest teilweise durch Abscheiden in metallischer Form erfolgt.

Als aktive Masse der positiven Elektrode wird eine Komponente der Zelle bezeichnet, die bei der an der positiven Elektrode ablaufenden Redoxreaktion ihren Ladungszustand ändert. Bei den erfindungsgemäßen Zellen ist die aktive Masse der positiven Elektrode bevorzugt eine Interkalationsverbindung, in die das aktive Metall eingelagert werden kann. Insbesondere eignen sich Metallverbindungen (beispielsweise Oxide, Halogenide, Phosphate, Sulfide, Chalkogenide, Selenide), wobei insbesondere Verbindungen eines Übergangsmetalls M, insbesondere eines Elementes der Ordnungszahlen 22 bis 28 einschließlich Mischoxiden und andere Mischverbindungen der Metalle geeignet sind. Lithiumkobaltoxid ist besonders bevorzugt. Beim Entladen einer solchen Zelle werden Ionen des aktiven Metalls in die positive aktive Masse eingelagert. Aus Gründen der Ladungsneutralität führt dies zu einer Elektrodenreaktion der positiven aktiven Masse an der Elektrode, bei der ein Elektron von einem Ableitelement der Elektrode in die positive aktive Masse übertritt. Beim Laden findet der umgekehrte Prozess statt: das aktive Metall (beispielsweise Lithium) wird als Ion aus der positiven aktiven Masse ausgelagert, wobei ein Elektron von dieser in das Ableitelement der positiven Elektrode übertritt.

Ein grundlegendes Prinzip der Batterietechnik besteht darin, dass das aktive Metall der negativen Elektrode und die aktive Masse der positiven Elektroden derartig voneinander getrennt sind, dass zwischen ihnen keine elektronische Leitung innerhalb der Zelle möglich ist, weil dadurch die Funktion der Zelle in mehrerlei Hinsicht gestört wird:
- Sowohl die Umwandlung elektrischer Energie in chemische Energie beim Laden der Zelle als auch die umgekehrte Konvertierung chemischer Energie in elektrische Energie beim Entladen basiert auf Elektrodenreaktionen (Redoxreaktionen), die an beiden Elektroden zwischen dem jeweiligen aktiven Material und dem elektronisch leitenden Ableitelement (Substrat) der jeweiligen Elektrode stattfinden. Der aus den Elektrodenreaktionen resultierende Elektrodenstrom soll durch den äußeren Stromkreis fließen. Ein elektronisch leitender Kontakt zwischen dem aktiven Metall der negativen Elektrode und der aktiven Masse der positiven Elektrode bildet ein Kurzschluss, der einen unmittelbaren Elektronenübergang zwischen den Elektroden innerhalb der Zelle ermöglicht. Ein solcher Kurzschluss führt zu Ladungsverlusten, also zu einer verschlechterten Effizienz beim Laden und zu einem Verlust an gespeicherter elektrischer Energie durch Selbstentladung.
- Kurzschlüsse bedeuten hohe Stromflüsse und folglich eine hohe Wärmeerzeugung. Dies kann zu einem "thermal runaway" und damit verbundenen Sicherheitsproblemen führen.

Die erforderliche Trennung der aktiven Massen wird üblicherweise dadurch erreicht, dass sie in räumlich getrennten Schichten enthalten sind, die meist durch einen Separator getrennt sind. Als Separator bezeichnet man in der Batterietechnik ein Material, das geeignet ist, die Elektroden, insbesondere deren aktiven Massen, hinsichtlich elektronischer Leitung voneinander zu isolieren, andererseits aber die erforderliche ionische Leitung zu ermöglichen. Der Separator trennt das Gesamtvolumen der Batteriezelle in zwei Teilräume, nämlich einen positiven Elektrodenraum und einen negativen Elektrodenraum, zwischen denen ein Ladungsaustausch durch die Ionen des Leitsalzes möglich, ein elektronischer Ladungsaustausch jedoch unmöglich ist. Dies gilt unabhängig von der Zellform, also beispielsweise auch für Wickelzellen, bei denen die Teilräume als dünne parallel verlaufende, um eine gemeinsame Achse gewickelte Schichten ausgebildet sind.

In der US-Patentanmeldung 2003/0099884 werden ineinander eindringende (interpenetrating) Elektroden für Batteriezellen empfohlen. Gemäß dem Dokument sind dies Elektroden, die ein Netzwerk bilden, welches sich in zwei oder drei Dimensionen erstreckt, wobei jede Elektrode in die andere eindringt. Im Vergleich zu den üblichen Dünnschichtzellen soll dadurch (bei unverändert hoher Energiedichte) eine erhöhte Leistungsdichte erreicht werden. Bei den in dem Dokument beschriebenen Ausführungsformen bestehen die ineinander greifenden Elektroden aus Insertionsmaterialien, bevorzugt Interkalationsmaterialien, in deren Gitterstruktur das aktive Metall gebunden wird. Durch eine Reihe besonderer Maßnahmen, insbesondere durch eine aufeinander abgestimmte elektrostatische Anziehung bzw. Abstoßung der Elektrodenmaterialien und des Elektrolyten soll dabei erreicht werden, dass die Elektroden trotz ihrer ineinander eindringenden Struktur vollständig voneinander separiert sind, wobei sich in den Zwischenräumen zwischen den Elektroden Elektrolyt befindet. Dadurch sollen Kurzschlüsse vollständig vermieden werden.

Im Gegensatz zu diesem Dokument und den weiter oben erläuterten Lithium-Ionen-Batterien bezieht sich die Erfindung auf Zellen, bei denen das aktive Metall während des Ladevorgangs wenigstens teilweise in metallischer Form (also nicht gebunden innerhalb einer Insertions- oder Interkalationselektrode) abgeschieden wird. Um bei solchen Zellen trotz des in metallischer Form vorhandenen Lithiums die erforderliche Sicherheit zu gewährleisten, wird in der W02003/061036 vorgeschlagen, in unmittelbarem Kontakt zu dem elektronisch leitenden Substrat der negativen Elektrode eine Schicht mit einer mikroporösen Struktur vorzusehen, deren Porengröße so bemessen ist, dass die beim Ladevorgang abgeschiedene aktive Masse kontrolliert in ihre Poren hineinwächst, und die deshalb auch als "Abscheideschicht" bezeichnet wird. Die Poren der Abscheideschicht sollen durch die in die poröse Struktur hineinwachsende aktive Masse derartig vollständig gefüllt werden, dass diese im wesentlichen nur über die relativ kleinen Grenzflächen, an denen (innerhalb der Poren) die weitere Abscheidung stattfindet, in Kontakt zu dem Elektrolyt stehen. Die Publikation beschreibt zusätzliche Maßnahmen hinsichtlich der Schichtstruktur der Abscheideschicht, durch die die gewünschte Porengröße und Porosität sowie die erforderliche Sicherheit möglichst gut gewährleistet wird. Hierzu gehört die Verwendung mehrerer Materialien mit unterschiedlicher Korngröße zur Bildung der porösen Struktur und die Verwendung eines zusätzlich in die Abscheideschicht integrierten Salzes.

Auch in der WO2005/031908 wird eine ähnliche Konstruktion mit einer Abscheideschicht beschrieben, wobei dieser Publikation die Erkenntnis zu entnehmen ist, dass ein Separator zwischen der Abscheideschicht der negativen Elektrode und der von der aktiven Masse der positiven Elektrode gebildeten Schicht nicht unbedingt erforderlich ist. Vielmehr soll die Grenze zwischen der positiven Elektrode und der negativen Elektrode so ausgebildet sein, dass das während des Ladens der Zelle an der negativen Elektrode abgeschiedene aktive Metall mit der aktiven Masse der positiven Elektrode derart in Kontakt kommen kann, dass an deren Oberfläche lokal begrenzte Kurzschlussreaktionen stattfinden.

Im Rahmen der vorliegenden Erfindung wurde festgestellt, dass überraschenderweise eine Elektrodenkonstruktion nicht nur möglich, sondern sogar besonders vorteilhaft ist, bei der die aktive Masse der positiven Elektrode und das beim Laden der Elektrode abgeschiedene aktive Metall der negativen Elektrode nicht in getrennten (üblicherweise schichtförmigen) Elektrodenräumen lokalisiert sind, sondern das aktive Metall zumindest teilweise in metallischer Form in eine poröse Struktur hineinwächst, die deren aktive Masse enthält. Dabei besteht an der sehr großen inneren Oberfläche der porösen Struktur der positiven Elektrode die Möglichkeit zum Kontakt und damit zum Kurzschluss zwischen den beiden aktiven Massen.

Die poröse Struktur besteht aus einem strukturbildenden Material (Feststoff) und den darin (vorzugsweise homogen) verteilten Poren. Grundsätzlich ist jede Struktur verwendbar, deren Porosität zur Aufnahme des beim Laden der Zelle abgeschiedenen Lithiums geeignet ist. Bevorzugt ist eine aus Partikeln gebildete poröse Struktur, wobei die strukturbildenden Partikel vorzugsweise so miteinander verbunden sind, dass sie eine zusammenhängende Partikelverbundstruktur bilden. Grundsätzlich kann die die aktive Masse der positiven Elektrode enthaltende poröse Struktur aber auch aus miteinander nicht verbundenen Partikeln bestehen, wobei durch geeignete Maßnahmen (z.B. Einstampfen in die Zelle, Pressen) dafür gesorgt sein muss, dass die Partikel in einem so engen und festen Kontakt zueinander stehen, dass die erforderliche elektronische Leitfähigkeit gewährleistet ist.

Zur Optimierung der elektronischen Leitfähigkeit enthält die die aktive Masse der positiven Elektrode enthaltende poröse Struktur gemäß einer bevorzugten Ausführungsform der Erfindung innerhalb ihres strukturbildenden Materials ein elektronisch leitendes Material als Leitfähigkeitsverbesserer. Hierzu eignen sich beispielsweise Kohlenstoffpartikel oder Metallpartikel (z.B. Flitter, Späne etc.). Kohlenstoff ist besonders bevorzugt. Gemäß weiteren bevorzugten Ausführungsformen können die strukturbildenden Partikel zur Bildung der die positive aktive Masse enthaltende poröse Struktur in einen Metallschaum (beispielsweise Nickelschaum) eingebracht werden. Es ist auch möglich', sie durch Pressen oder mittels eines Bindemittels auf ein Blech oder Streckmetall zu fixieren.

Die die aktive Masse der positiven Elektrode enthaltende poröse Struktur bildet vorzugsweise eine Schicht, die sich parallel zu dem elektronisch leitenden Substrat der negativen Elektrode (das nachfolgend auch als Ableitelement bezeichnet wird) erstreckt. Sie wird nachfolgend auch als "poröse positive Elektrodenschicht" bezeichnet. Bevorzugt hat die erfindungsgemäße Zelle nur zwei Schichten, nämlich das in der Regel sehr dünne Ableitelement (Substrat) der negativen Elektrode und die verhältnismäßig sehr viel dickere positive Elektrodenschicht. Das erforderliche Zellvolumen wird folglich im wesentlichen durch das Volumen der positiven Elektrodenschicht bestimmt. Ein zusätzliches Aufnahmevolumen für das beim Laden der Zelle abgeschiedene aktive Metall ist nicht erforderlich. Dadurch wird eine wesentliche Erhöhung der Energiedichte erreicht. Nach den vorliegenden Untersuchungen lässt sich erfindungsgemäß eine praktische Energiedichte von über 1,5 kWh/l erreichen.

Daneben resultiert überraschenderweise ein Gewinn an Sicherheit. Erfindungsgemäß wird eine makroskopisch im wesentlichen homogene Verteilung der Komponenten erreicht. Damit ergeben sich in der Realität die Bedingungen, die übliche Sicherheitsberechnungen auf der Grundlage des Berthelot-Roth'schen Produkts (BRP) voraussetzen. Es wird also tatsächlich ein Grad an Explosionssicherheit erreicht, der gemäß dem BRP errechnet wird.

Bei der Berechnung des BRP wird davon ausgegangen, dass die Reaktionskomponenten homogen gemischt sind, so dass eine optimale Reaktionsfähigkeit gewährleistet ist. Sind die Komponenten nicht homogen verteilt, sondern räumlich getrennt, wie z.B. in den Elektrodenschichten einer herkömmlichen Batterie, so ist die tatsächliche Explosionsfähigkeit höher, als gemäß dem errechneten BRP zu erwarten ist. Ab einem Wert des BRP von 1200 x 10⁶ kJ/m³ spricht man von einem explosionsfähigen Stoff. Das System Lithium/Lithiumkobaltoxid mit anorganischer Elektrolytlösung LiAlCl₄xSO₂ hat einen Wert von ca. 200x10⁶ kJ/m³. Bei einer erfindungsgemäßen Zelle kann von einem makroskopisch homogenen Gemisch ausgegangen werden, so dass der errechnete Wert des BRP ein im wesentlichen richtiges Maß für die tatsächliche Explosionssicherheit ist.

Die Erfindung führt zu einer "inhärent sicheren" Zelle, also zu einer Batteriezelle, deren Sicherheit nicht auf zusätzlichen externen Sicherheitsmaßnahmen, sondern auf ihren physikalisch-chemischen Eigenschaften und inneren Konstruktionsmerkmalen basiert. Wichtig dabei ist auch, dass nur sehr wenig Elektrolyt benötigt wird. Vorzugsweise entspricht das Volumen des Elektrolyts in der Zelle höchstens dem doppelten, besonders bevorzugt höchstens dem einfachen freien Porenvolumen der porösen Struktur der positiven Elektrode. Als die Funktion der Zelle und insbesondere deren Sicherheit fördernde Maßnahme kann außer dem Leitsalz ein zusätzliches Salz, insbesondere ein Halogenid, besonders bevorzugt eines Fluorid in der Zelle enthalten sein. Das Kation des Salzzusatzes kann mit dem Kation des Leitsalzes identisch, aber auch unterschiedlich sein. Bevorzugtes Kation des zusätzlichen Salzes ist Li⁺ oder ein anderes Alkalimetall-Kation. Der Salzzusatz ist vorzugsweise in dem Elektrolyt enthalten.

Die Erfindung ist besonders vorteilhaft in Verbindung mit einer Batteriezelle gemäß der internationalen Patentanmeldung WO 00/79631 A1 zu verwenden, die mit einer sehr geringen Elektrolytmenge betrieben werden kann. Dabei handelt es sich um eine Zelle, deren negative Elektrode im geladenen Zustand ein aktives Metall, insbesondere ein Alkalimetall, enthält, deren Elektrolyt auf Schwefeldioxid basiert und die eine positive Elektrode aufweist, die das aktive Metall enthält und aus der beim Ladevorgang Ionen in den Elektrolyt austreten. Der Elektrolyt basiert auf Schwefeldioxid. An der negativen Elektrode findet eine Selbstentladereaktion statt, bei der das Schwefeldioxid des Elektrolyten mit dem aktiven Metall der negativen Elektrode zu einer schwerlöslichen Verbindung reagiert. Gemäß der in der internationalen Patentanmeldung beschriebenen Erfindung ist die elektrochemische Ladungsmenge des in der Zelle enthaltenen Schwefeldioxids, berechnet mit einem Faraday pro Mol Schwefeldioxid, kleiner als die elektrochemisch theoretisch in der positiven Elektrode speicherbare Ladungsmenge des aktiven Metalls. Dadurch kann die Batteriezelle mit einer wesentlich verminderten Elektrolytmenge und dennoch verbesserter Funktion betrieben werden. Wegen weiterer Einzelheiten wird auf das genannte Dokument Bezug genommen, dessen Inhalt durch die Bezugnahme auch zum Inhalt der vorliegenden Anmeldung gemacht wird.

Sofern zur Herstellung eines Partikelverbundes ein Bindemittel in der porösen Struktur vorhanden ist, sollte es einen nicht zu hohen Volumenanteil von weniger als 50 %, bevorzugt weniger als 30 % an dem gesamten Feststoffvolumen der porösen Struktur haben. Bevorzugt ist der Bindemittelanteil so niedrig, dass es nur im Bereich der Kontaktstellen zwischen den strukturbildenden Partikeln sitzt. Deswegen sind Bindemittelanteile (Volumenrelation des Bindemittels zu dem Gesamtvolumen der strukturbildenden Partikel) von weniger als 20 % oder sogar weniger als 10 % besonders bevorzugt.

Die positive aktive Masse ist in der porösen Struktur der positiven Elektrodenschicht vorzugsweise mit einem Anteil von mindestens 50 Gew.% enthalten. Bevorzugt bestehen die strukturbildenden Partikel der porösen Struktur weit überwiegend, also mit einem Anteil von mindestens 80 %, aus dem Material der positiven aktiven Masse. Als Bindemittel eignet sich beispielsweise Polytetrafluorethylen.

Die Porosität der porösen positiven Elektrodenschicht, d.h. das Volumenverhältnis zwischen den Poren und dem Gesamtvolumen, kann in erheblichem Umfang variieren. Vorzugsweise liegt die Porosität in der porösen positiven Elektrodenschicht zwischen 20 und 80 %, bevorzugt zwischen 25 und 75 % und besonders bevorzugt zwischen 25 und 50 %. Um eine optimale Energiedichte zu erreichen, sollte das gesamte Porenvolumen nur unwesentlich größer als das Volumen des maximal beim Laden an dem Substrat der negativen Elektrode abgeschiedenen aktiven Metalls sein.

Auch hinsichtlich des mittleren Durchmessers der Poren der porösen positiven Elektrodenschicht sind erhebliche Variationen möglich. Sofern das aktive Metall in Form von sogenannten Whiskern oder Dendriten abgeschieden wird, sollte der mittlere Porendurchmesser in deren Größenordnung liegen. Dies entspricht in der Regel in einem auf SO₂ basierenden Elektrolyten etwa 1 bis 2 µm. Kleinere Werte können zu einer Erhöhung der zum Laden erforderlichen Überspannung führen, sind aber grundsätzlich möglich. Auch größere mittlere Porendurchmesser können je nach Anwendungsfall akzeptabel sein. Vorzugsweise sollte der mittlere Porendurchmesser der porösen positiven Elektrodenschicht höchstens 500 µm, bevorzugt höchstens 100 µm und besonders bevorzugt höchstens 10 µm betragen.

Überraschenderweise hat sich gezeigt, dass bei einer erfindungsgemäßen Zellkonstruktion im Betrieb der Zelle Kurzschlüsse innerhalb der Poren der positiven Elektrodenschicht, durch die deren Funktion dauerhaft gestört würde, durch eine deren innere Oberfläche bedeckende Schicht verhindert werden, die als "intraporöse Separatorschicht" bezeichnet wird.

Die intraporöse Separatorschicht wird vorzugsweise mindestens zum Teil innerhalb der Zelle (in situ) erzeugt. Dies geschieht insbesondere während des Ladens der Zelle. Die erste Erzeugung der intraporösen Separatorschicht kann während erster Ladezyklen der Batteriezelle erfolgen. Die intraporöse Separatorschicht kann jedoch auch während des weiteren Betriebs gebildet bzw. erneuert werden. Dies gilt insbesondere bei einer eventuellen Beschädigung der Schicht. Fehlende Teile der intraporösen Separatorschicht werden während der nachfolgenden Ladezyklen neu gebildet bzw. ergänzt. Dieser Reparaturmechanismus bleibt über die gesamte Lebensdauer der Zelle erhalten und gewährleistet inhärent sichere und funktionsfähige Zellen.

Ein Reaktionsmechanismus, durch den auf der inneren Oberfläche der porösen positiven Elektrodenschicht eine Deckschicht gebildet wird, die als intraporöse Separatorschicht geeignet ist, ist in unterschiedlichen Zellsystemen möglich. Allgemeine Regeln für die Auswahl geeigneter Zellsysteme können nicht angegeben werden, es ist jedoch in Kenntnis der vorliegenden Erfindung ohne weiteres möglich, potentiell geeignete Zellsysteme daraufhin zu testen, ob in ihnen (insbesondere beim Laden der Zelle) die gewünschte Bildung einer intraporösen Separatorschicht stattfindet.

In diesem Zusammenhang sind Zellsysteme bevorzugt, die einen Elektrolyten enthalten, welcher mit den übrigen Komponenten der Zelle, insbesondere beim Laden der Zelle, zu einer Deckschicht reagiert, die die erläuterten Eigenschaften eines intraporösen Separators hat.

Besonders geeignet ist ein Elektrolyt, der SO₂ enthält. Es muss sich dabei jedoch nicht notwendigerweise um einen auf SO₂ basierenden Elektrolyten im Sinne der oben angegebenen Definition handeln. Vielmehr kann das SO₂ auch in geringerer Konzentration in Mischung mit einem anderen Elektrolyten (Beispiele wurden weiter oben genannt) verwendet werden, wobei insbesondere auch Mischungen mit Elektrolyten, die organische Lösungsmittel enthalten, möglich sind.

Die intraporöse Separatorschicht kann auch durch Beschichten der inneren Oberfläche der porösen positiven Elektrodenschicht während der Produktion der Zelle gebildet werden. Hierzu eignen sich verschiedene Substanzen, z.B. auf der Grundlage ionenleitender Gläser, ionenleitender keramischer Massen und ionenleitender Kunststoffe, wobei geeignete Materialien folgende Bedingungen erfüllen müssen:
- Es muss möglich sein, sie in einer hinreichend dünnen Schicht auf die innere (bevorzugt auch auf die äußere) Oberfläche der porösen positiven Elektrodenschicht aufzutragen.
- Das Material muss chemisch stabil sein, also inert gegenüber den übrigen in der Zelle anwesenden Komponenten, auch im elektrischen Feld.

Die Erzeugung bzw. Aufbringung der intraporösen Separatorschicht kann mit unterschiedlichen geeigneten Verfahren erfolgen. Hierzu gehören:
- Die Beschichtung der strukturbildenden Partikel, bevor daraus die poröse positive Elektrodenschicht gebildet wird;
- Beschichtungsverfahren, die auf der Durchleitung von Gas beruhen (beispielsweise Physical Vapor Deposition, Chemical Vapor Deposition, Plasma- oder Hochstromentladungen). Auch Verfahren, bei denen eine Flüssigkeit durchgeleitet wird, können geeignet sein;
- Beschichtungsverfahren aus der Gasphase, insbesondere Sputtern, wobei die Atome derartig in die poröse positive Elektrodenschicht eindringen, dass sie deren innere Oberfläche bedecken.

Beide beschriebenen Möglichkeiten zur Bildung einer intraporösen Separatorschicht (in situ oder Beschichten während der Produktion vor dem erstmaligen Laden der Zelle) können auch kombiniert werden. Zum Beispiel kann ein Beschichtungsverfahren durchgeführt werden, bei dem überwiegend die poröse positive Elektrodenschicht teilweise (bevorzugt zum größeren Teil) vor dem ersten Ladevorgang mit einem der vorstehend beschriebenen Verfahren beschichtet wird, jedoch die vollständige intraporöse Separatorschicht erst während des Betriebes der Zelle (d.h. insbesondere während der ersten Ladezyklen) gebildet wird.

Falls nicht zumindest die äußere Oberfläche der porösen positiven Elektrodenschicht vor dem Einbau in die Zelle elektronisch isolierend beschichtet wurde, ist es zweckmäßig, zur Vermeidung von während des Zusammenbaus der Zelle auftretenden elektronischen Kurzschlüssen an der Grenzfläche zwischen dem Substrat der negativen Elektrode und der die aktive Masse der positiven Elektrode enthaltenden porösen Struktur Mittel vorzusehen, durch die eine elektronische Leitung verhindert wird, die aber für das aus der Elektrodenreaktion an der negativen Elektrode beim Laden der Zelle resultierende aktive Material passierbar sind. Hierzu eignen sich insbesondere folgende Mittel:
- eine Beschichtung des Substrats der negativen Elektrode mit einer elektronisch isolierenden aber für Lithiumionen durchlässige Schicht;
- eine Beschichtung der äußeren Oberfläche der porösen positiven Elektrodenschicht mit einer elektronisch isolierenden aber für Lithiumionen durchlässige Schicht und
- der Einbau eines sehr dünnen porösen elektronisch isolierenden Schichtmaterials, beispielsweise eines Glasgewebes, das das spätere Durchdringen des aktiven Metalls (insbesondere Lithium) nicht behindert.

Die Erfindung wird nachfolgend anhand von in den Figuren dargestellten Ausführungsbeispielen näher erläutert. Die dargestellten Besonderheiten können einzeln oder in Kombination verwendet werden, um bevorzugte Ausgestaltungen der Erfindung zu schaffen. Es zeigen:
- Fig. 1: eine Querschnittsdarstellung einer erfindungsgemäßen Batterie;
- Fig. 2: eine Prinzipdarstellung des Substrats der negativen Elektrode und der porösen -Struktur einer positiven Elektrode, in deren Poren aktives Metall der negativen Elektrode eindringt;
- Fig. 3: eine Prinzipdarstellung ähnlich Figur 2 mit einer porösen positiven Elektrodenschicht, deren Poren ein das aktive Metall der negativen Elektrode speicherndes Material enthalten;
- Fig. 4: Messergebnisse, die bei der experimentellen Erprobung der Erfindung mittels zyklischer Voltametrie gewonnen wurden;
- Fig. 5: Messdaten erfindungsgemäßer Zellen.

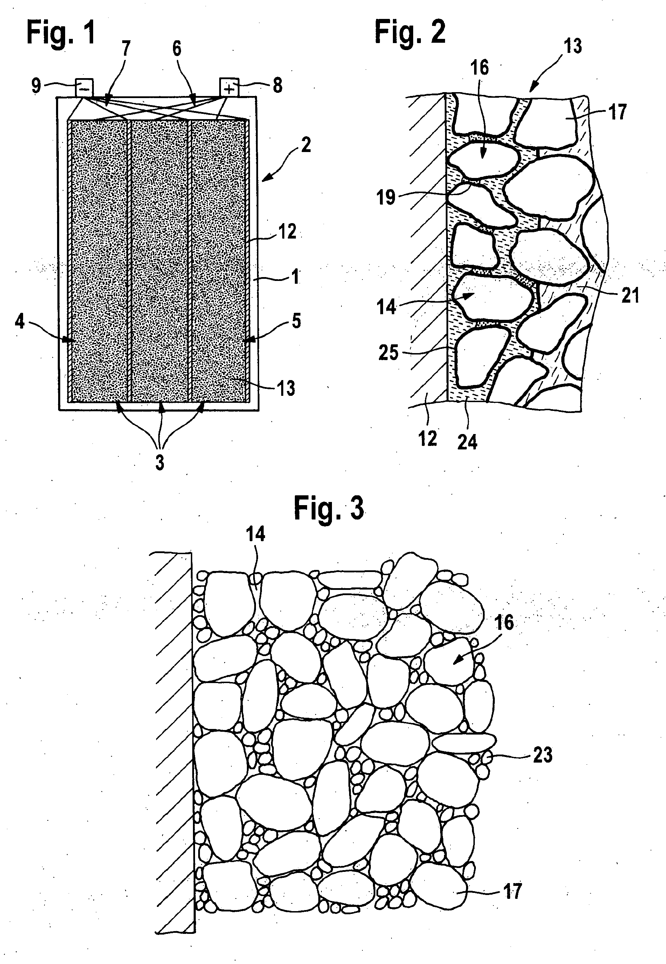

Das Gehäuse 1 der in Figur 1 dargestellten Batterie 2 besteht beispielsweise aus Edelstahl und enthält mehrere Batteriezellen 3, die jeweils eine positive Elektrode 4 und eine negative Elektrode 5 haben. Die Elektroden 4,5 sind - wie in der Batterietechnik üblich - über Elektrodenanschlüsse 6,7 mit Anschlusskontakten 8,9 verbunden. Sie sind - ebenfalls wie üblich - als Schichten mit einer im Verhältnis zu ihrer Flächenausdehnung geringen Dicke ausgebildet. Selbstverständlich ist statt der dargestellten Parallelschaltung der Zellen auch ein bipolarer Aufbau (Reihenschaltung) möglich.

Eine Besonderheit der in Figur 2 gesondert dargestellten Elektrodenanordnung erfindungsgemäßer Zellen besteht darin, dass das elektronisch leitende Substrat 12, welches das Ableitelement der negativen Elektrode bildet, unmittelbar an eine die aktive Masse der positiven Elektrode enthaltende poröse Struktur 13 (poröse positive Elektrodenschicht) derart angrenzt, dass beim Laden der Zelle abgeschiedenes Lithium (aktive Masse der negativen Elektrode) in ihre Poren 14 eindringt. Das Ableitelement 12 der negativen Elektrode ist sehr viel dünner als die poröse positive Elektrodenschicht. In dieser und auch in anderer Hinsicht sind die Prinzipdarstellungen der Figuren nicht maßstäblich. Vorzugsweise ist die poröse positive Elektrodenschicht mindestens zehn mal so dick wie die elektronisch leitende Schicht, die das Ableitelement 12 bildet.

Die Elektroden 4,5 befinden sich bei den erfindungsgemäßen Zellen nicht in getrennten Schichten (makroskopisch getrennten Teilräumen der Zelle), sondern die aktive Masse der positiven Elektrode ist zugleich ein struktureller Bestandteil einer porösen Schicht, in deren Poren das Lithium beim Laden der Zelle aufgenommen und zumindest teilweise in metallischer Form abgeschieden wird. Die übliche räumliche Trennung der Teile der Zelle, die die erforderliche Aufnahmekapazität für Lithium zur Verfügung stellen und der Teile der Zelle, die die positive aktive Masse enthalten, in gesonderten Schichten ist nicht gegeben. Die Zelle enthält nur noch die beiden in den Figuren dargestellten Funktionsschichten, nämlich das elektronisch leitende Substrat 12 der negativen Elektrode und die poröse positive Elektrodenschicht 13.

Figur 2 zeigt eine stark vereinfachte Prinzipdarstellung einer mikroskopischen Vergrößerung eines Ausschnitts der porösen positiven Elektrodenschicht 13 in der Nachbarschaft des negativen Ableitelements 12. Man erkennt strukturbildende Partikel 16 der Schicht 13, die bei der dargestellten Ausführungsform aus der aktiven Masse 17 der positiven Elektrode 4 (z.B. LiCoO₂) bestehen. Die strukturbildenden Partikel 16 sind mittels eines Bindemittels 19 miteinander verbunden, dessen Menge so bemessen ist, dass es nur dort konzentriert ist, wo die strukturbildenden Partikel 16 aneinander angrenzen, im übrigen aber zahlreiche Verbindungskanäle zwischen den Poren 14 der porösen positiven Elektrodenschicht 13 verbleiben. Die Poren 14 der Schicht 13 sind vor dem ersten Ladevorgang mit Elektrolyt 21 gefüllt. Verfahren, durch die gewährleistet werden kann, dass der Elektrolyt beim Befüllen auch in feine Poren einer porösen Schicht eindringt, sind bekannt. Ein geeignetes Verfahren ist beispielsweise in der WO 2005/031908 beschrieben.

Weiterhin zeigt Figur 2, wie das aktive Metall 24 der negativen Elektrode, beispielsweise Lithium, in die Poren 14 der porösen positiven Elektrodenschicht 13 hineinwächst, wenn es beim Laden der Zelle an der Oberfläche des Ableitelementes 12 abgeschieden wird. Die erforderliche Trennung der aktiven Massen 24,17 der beiden Elektroden wird durch eine intraporöse Separatorschicht 25 gewährleistet, die die gesamte innere Oberfläche der porösen positiven Elektrodenschicht 13, also die Oberfläche von deren strukturbildenden Partikeln 16 bedeckt.

Wie bereits erläutert, kann die intraporöse Separatorschicht im Rahmen der Herstellung der Batterie 2 mit den Zellen 3 dadurch erzeugt werden, dass die Oberfläche der strukturbildenden Partikel mit einer Deckschicht überzogen werden, die die erforderlichen Eigenschaften (Isolation gegen Elektronenleitung, Durchlässigkeit für Ionen, keine schädlichen Wirkungen auf die übrigen Komponenten der Zelle) besitzt. Hierzu gehören insbesondere ionenleitende Gläser, wobei es sehr viele Variationsmöglichkeiten der darin enthaltenen Komponenten, beispielsweise Metalloxide oder Metallsulfate gibt. Dabei kann auf vorliegende wissenschaftliche Untersuchungen zurückgegriffen werden, die insbesondere bei der Erforschung von Feststoff-Elektrolyten (solid electrolytes) gewonnen wurden. Solche Forschungsergebnisse wurden beispielsweise publiziert in:
P. Hagenmuller, W. Van Gool (Editors): Solid Electrolytes, Academic Press, Publikationsjahr ..., wobei insbesondere auf die darin enthaltene Publikation D. Ravaine et al. "Ionic Conductive Glases" pp. 277 bis 290, verwiesen werden kann.

Besonders bevorzugt ist eine Ausführungsform der Erfindung, bei der die intraporöse Separatorschicht in situ gebildet wird, wobei dieser Bildungsprozess überwiegend während der ersten Ladezyklen stattfindet. Die Bildung der intraporösen Separatorschicht kann sowohl beim Hersteller der Batterie, als auch dem Benutzer erfolgen.

Vorzugsweise ist die poröse positive Elektrodenschicht 13 derartig eng an dem Substrat 12 der negativen Elektrode 5 angeordnet, dass dazwischen keine Hohlräume vorhanden sind, in denen sich Ansammlungen von beim Laden der Zelle abgeschiedenem aktivem Metall 24 in metallischer Form bilden können. Bevorzugt sollten solche Hohlräume jedenfalls nicht wesentlich größer als die Poren der porösen positiven Elektrodenschicht 13 sein.

Gemäß einer weiteren bevorzugten Ausführungsform, die in Figur 3 dargestellt ist, befindet sich in den Poren 14 der porösen positiven Elektrodenschicht 13 ein das aktive Metall der negativen Elektrode speicherndes Material 23, welches nachfolgend ohne Beschränkung der Allgemeinheit als lithiumspeicherndes Material bezeichnet wird. Als lithiumspeicherndes Material eignen sich unterschiedliche Feststoffe, die die Eigenschaft haben, dass sie Lithium in sich aufnehmen können. Hierzu gehören insbesondere Graphit, Interkalationsverbindungen sowie mit Lithium legierende Metalle. Durch die Verwendung eines derartigen Materials in den Poren 14 der porösen positiven Elektrodenschicht 13 wird zwar das Volumen, welches zur Aufnahme des aus der Elektrodenreaktion resultierenden aktiven Metalls notwendig ist, etwas erhöht und damit die maximale Energiedichte gesenkt. Dennoch kann die Maßnahme vorteilhaft sein, insbesondere zur Erhöhung der Leitfähigkeit und damit zur Senkung des Innenwiderstandes der Batteriezelle. Auch bei dieser Ausgestaltung findet jedoch die Speicherung des Lithiums zum Teil in metallischer Form statt. Generell sollte dieser Anteil, bezogen auf die Gesamtmenge des beim vollständigen Laden der Zelle gespeicherten Lithiums, mindestens 30, besonders bevorzugt mindestens 50 %, betragen.

Das elektronisch leitende Substrat 12 kann vollständig aus Metall, vorzugsweise Nickel, ausgebildet sein. Geeignet ist ein einfaches Nickelblech, jedoch sind auch andere Metallstrukturen, insbesondere in Form eines Lochbleches oder dergleichen möglich. Gemäß einer weiteren alternativen Ausführungsform besteht auch das elektronisch leitende Substrat 12 der negativen Elektrode zumindest teilweise aus einem deren aktives Metall speichernden Material, insbesondere also aus einem lithiumspeichernden Material. Bei einer solchen Ausführungsform wird beim Laden der Zelle zunächst ein Teil des aus der Elektrodenreaktion resultierenden Lithiums in dem elektronisch leitenden Substrat der negativen Elektrode gespeichert. Auch hier findet jedoch mindestens bei einem Teil des Ladevorgangs eine Abscheidung von aktivem Metall in metallischer Form in den Poren der Schicht 13 statt.

Im Rahmen der experimentellen Erprobung der Erfindung wurden Experimentalelektroden mit einer geometrischen Oberfläche von 1 cm² mit einer porösen positiven Elektrodenschicht wie folgt hergestellt:
- Die Komponenten der Elektrodenschicht, nämlich 94 % Lithiumkobaltoxid, 4 % Binder (PTFE) und 2 % Carbon Black wurden trocken gemischt.
- Die Mischung wurde in Isopropanol aufgenommen, so dass sich eine Paste ergab, deren Lösungsmittelgehalt ca. 20 bis 30 Gew.% betrug.
- Die Paste wurde durch Rühren homogenisiert und dann in ein Ableitelement aus Nickelschaum einpastiert.
- Anschließend wurde eine Trocknung, danach ein Pressvorgang auf eine Porosität von 35 % und eine thermische Behandlung mit einer Erhitzung auf 370°C für 1 Stunde durchgeführt.

Mit diesen Experimentalelektroden wurden zunächst voltametrische Experimente in einer Drei-Elektroden-Zelle durchgeführt, mit der Experimentalelektrode als Arbeitselektrode, einer Gegenelektrode aus Nickelblech, auf dem beim Laden Lithium abgeschieden wurde, und einer mit Lithiummetall bedeckten Nickelelektrode als Referenzelektrode. Die Elektrodenanordnung in der Zelle unterschied sich von der üblichen Anordnung derartiger Experimentalzellen insofern, als die Arbeits- und Gegenelektrode so nah beieinander angeordnet waren, dass vor Beginn des Ladezykluss gerade kein elektrischer Kontakt dazwischen bestand. Dadurch wurde erreicht, dass das beim Laden abgeschiedene metallische Lithium in Kontakt zu der Arbeitselektrode kam. Dies entspricht bei herkömmlichen aufladbaren Batteriezellen einem internen Kurzschluss und führt beispielsweise bei Li-Ionen-Batteriesystemen zu sicherheitsgefährdenden Zuständen.

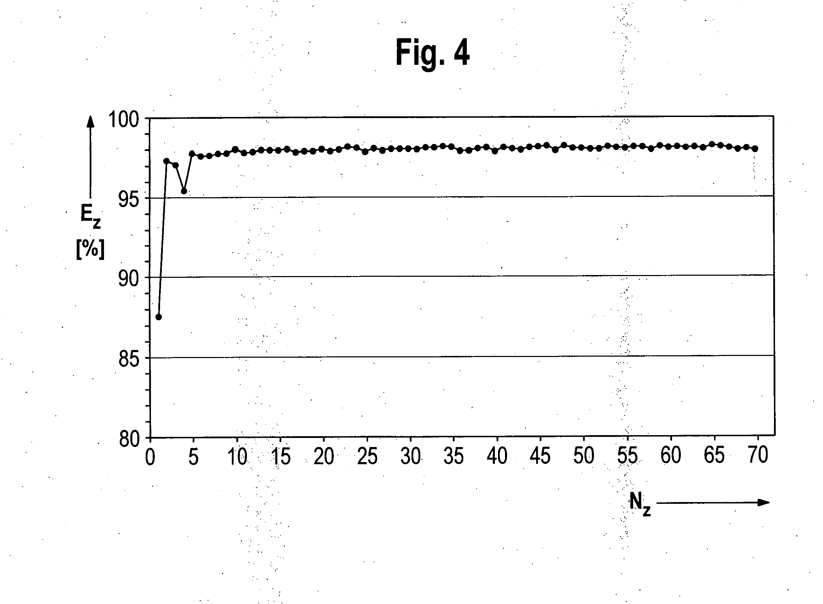

Figur 4 zeigt als Ergebnis der voltametrischen Untersuchungen mit der beschriebenen Experimentalanordnung mit dem Elektrolyt LiAlCl₄x1,5 SO₂ und einem Zusatz von 3 % LiF die Zykeleffizienz E_{z} aufgetragen über die Zykelnummer N_{z} für 70 Zyklen. Die Zykeleffizienz ist dabei definiert als der Prozentsatz der beim Entladen der Zelle entnommenen elektrischen Energie (Entladekapazität) in Relation zu der zum Laden verbrauchten elektrischen Energie (Ladekapazität).

Die in Figur 4 dargestellten Ergebnisse zeigen, dass während der ersten Zyklen die Zykeleffizienz erniedrigt ist. Dies lässt sich darauf zurückführen, dass während dieser Zyklen die intraporöse Separatorschicht gebildet wird. Die hierfür benötigte Ladekapazität fehlt beim Entladen der Zelle. Bereits nach einigen wenigen (im dargestellten Fall nach vier) Zyklen wird eine Zykeleffizienz von über 97 % erreicht, die danach konstant bleibt.

In einem zweiten Experiment wurden Experimentalelektroden hergestellt, wobei Lithiumkobaltoxid mit 1,5 Gew.% Aerosil und 1,5 Gew.% pulverförmigem Borosilikatglas gemischt wurden. Die trocken gemischten Substanzen wurden in Wasser aufgenommen. Die thermische Behandlung erfolgte bei 500°C für 25 Minuten. Die Prüfung von mit diesen Experimentalelektroden hergestellten Drei-Elektroden-Zellen analog Experiment 1 führten zu im wesentlichen gleichen Ergebnissen.

Gemäß den Ergebnissen der experimentellen Erprobung muss das Glas in seinem Ausgangszustand nicht notwendigerweise ionenleitend sein. Es wurde festgestellt, dass auch aus einem nicht ionenleitenden Glas, insbesondere Borosilikatglas, ein ionenleitendes Glas in situ gebildet werden kann, wobei dies auf einer Reaktionsfolge zurückgeführt wird, bei der zunächst aus dem Lithiumkobaltoxid der positiven Elektrode durch Reaktion mit Wasser Lithiumhydroxid und dann aus dem Lithiumhydroxid unter Aufnahme von Wasser Lithiumoxid gebildet wird, welches in das Glas eingelagert wird und die erforderliche Ionenleitfähigkeit bewirkt.

Um die überraschenden Ergebnisse der Experimente mit den Drei-Elektroden-Zellen zu überprüfen, wurden unter Verwendung des Elektrodenmaterials aus Experiment 1 vollständige erfindungsgemäße Batteriezellen des Systems (Ni-Blech) Li/LiAlCl₄x1,5 SO₂/LiCoO₂ aufgebaut. Sie enthielten zwischen dem Nickelblech 12 und der porösen positiven Elektrodenschicht 13 ein sehr dünnes grob poröses Glasgewebe von 60 µm Dicke, durch das das Ableitelement 12 und die poröse positive Elektrodenschicht 13 vor Beginn des Ladevorgangs voneinander isoliert waren. Dieses Gewebe stellt für das an der Oberfläche des Ableitelements 12 abgeschiedene Lithium keine Barriere dar, so dass es unmittelbar nach Beginn des Ladevorgangs schnell vollständigen Kontakt zu der aktiven Masse 17 der positiven Elektrode hat.

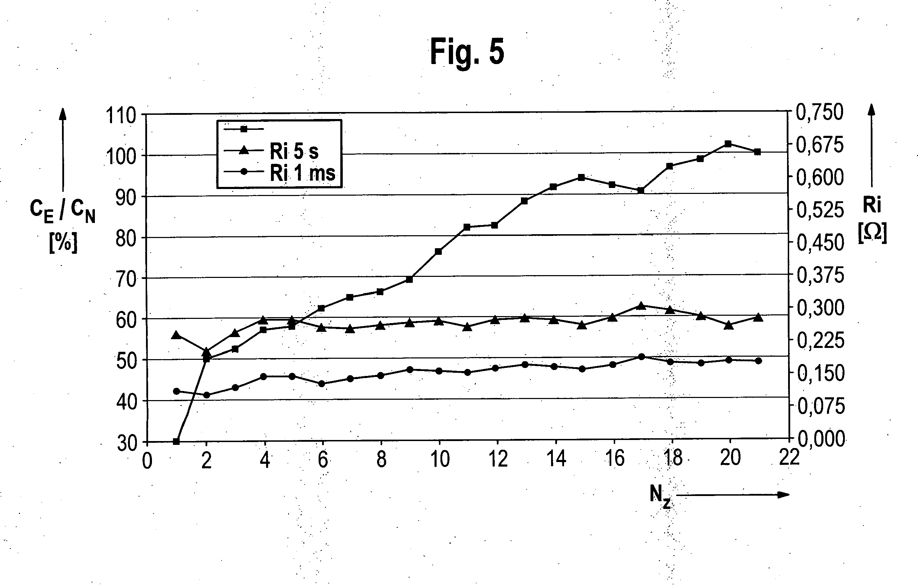

Figur 5 zeigt Ergebnisse dieser Experimente, wobei das Verhältnis der aus der Zelle entnehmbare Kapazität (C_{E}) zu der Nennkapazität (C_{N}) in %, sowie der Innenwiderstand Ri der Zelle nach 1 mS und nach 5 Sekunden gegen die Nummer des Ladezykluss aufgetragen ist. Man erkennt einen kontinuierlichen Anstieg der Kapazität bis zu 100 % der Nennkapazität innerhalb der ersten 20 Zyklen und einen im wesentlichen konstanten Verlauf der Widerstandswerte.

Nach dem gegenwärtigen Kenntnisstand der Erfinder wird die intraporöse Separatorschicht im Falle des untersuchten Batteriesystems durch Reaktionen verursacht, die durch kurzzeitige sehr hohe lokale Ströme ausgelöst werden, welche beim Auftreffen von Lithium auf das LiCoO₂ fließen und Reaktionen der Elektrolytbestandteile bzw. von Folgeprodukten auslösen, die üblicherweise bei in der Zelle ablaufenden Reaktionen gebildet werden. Die Elektrolytbestandteile sind LiAICl₄ und SO₂. Folgeprodukte entstehen z.B. beim Laden und Überladen, beispielsweise in Form von Lithiumchlorid (LiCl), Aluminiumchlorid (AlCl₃) oder Lithiumdithionit (Li₂S₂O₄) oder Sulfurylchlorid (SO₂Cl₂).

Wie bereits erläutert, ist die Erfindung nicht auf das untersuchte System beschränkt. Zwar eignet sich die erfindungsgemäße Konstruktion nicht für jedes Batteriesystem. Auf der Grundlage der hier gegebenen Erläuterungen ist es jedoch problemlos möglich, die Eignung unterschiedlicher Systeme in Verbindung mit der erfindungsgemäßen Konstruktion zu überprüfen und damit geeignete Systeme herauszufinden. Neben dem auf SO₂ basierendem Elektrolyten haben auch andere Elektrolyte, darunter auch organische Elektrolyte, die Eigenschaft, stabile Deckschichten bilden zu können, die die erforderlichen elektronisch isolierenden aber ionisch leitenden Eigenschaften haben. Besonders vorteilhaft können dafür Mischungen aus org. Elektrolyt und auf SO₂-basierendem Elektrolyt sein.

## Patentansprüche

1. Wiederaufladbare elektrochemische Batteriezelle mit einer negativen Elektrode (5), einem Elektrolyten und einer positiven Elektrode (4) sowie einem Speicher zum Speichern von aktivem Metall (24), das beim Laden der Zelle aus der Elektrodenreaktion an der negativen Elektrode (4) resultiert,
wobei
die Zelle eine poröse Struktur (13) enthält,
- in der die aktive Masse (17) der positiven Elektrode enthalten ist,
- die derart in der Nachbarschaft eines elektronisch leitenden Substrats (12) der negativen Elektrode (5) angeordnet ist, dass mindestens ein Teil des aus der Elektrodenreaktion an der negativen Elektrode resultierenden aktiven Metalls (24) in die Poren (14) der die aktive Masse (17) der positiven Elektrode (4) enthaltenden porösen Struktur (13) eindringt und dort gespeichert wird; und
die Speicherung des aktiven Metalls (24) in den Poren (14) der die aktive Masse (17) der positiven Elektrode enthaltenden porösen Struktur (13) zumindest teilweise durch Abscheiden in metallischer Form erfolgt.

2. Batteriezelle nach Anspruch 1, **dadurch gekennzeichnet, dass** die aktive Masse (17) der positiven Elektrode (4) in der porösen Struktur (13) mit einem Gewichtsanteil von mindestens 50 %, bevorzugt mindestens 80 % enthalten ist.

3. Batteriezelle nach einem der vorhergehenden Ansprüche, **dadurch gekennzeichnet, dass** die Porosität der die aktive Masse (17) der positiven Elektrode enthaltenden porösen Struktur (13) zwischen 20 und 80 %, bevorzugt zwischen 25 und 75 % und besonders bevorzugt zwischen 25 und 50 % beträgt.

4. Batteriezelle nach einem der vorhergehenden Ansprüche, **dadurch gekennzeichnet, dass** der mittlere Durchmesser der Poren (14) der die aktive Masse (17) der positiven Elektrode enthaltenden porösen Struktur (13) höchstens 500 µm, bevorzugt höchstens 100 µm und besonders bevorzugt höchstens 10 µm beträgt.

5. Batteriezelle nach einem der vorhergehenden Ansprüche, **dadurch gekennzeichnet, dass** die die aktive Masse (17) der positiven Elektrode enthaltende poröse Struktur (13) aus miteinander verbundenen Feststoffpartikeln (16) besteht.

6. Batteriezelle nach Anspruch 5, **dadurch gekennzeichnet, dass** die Feststoffpartikel (16) der die aktive Masse (17) der positiven Elektrode enthaltenden porösen Struktur (13) mittels eines Bindemittels (19) miteinander verbunden sind, wobei der Volumenanteil des Bindemittels (19) an dem gesamten Feststoffvolumen der porösen Struktur (13) höchstens 50 %, bevorzugt höchstens 30 %, besonders bevorzugt höchstens 20 % und noch weiter bevorzugt höchstens 10 % beträgt.

7. Batteriezelle nach einem der vorhergehenden Ansprüche, **dadurch gekennzeichnet, dass** die die aktive Masse (17) der positiven Elektrode enthaltende poröse Struktur (13) innerhalb ihres strukturbildenden Materials einen elektronisch leitenden Leitfähigkeitsverbesserer (18), vorzugsweise Kohlenstoffpartikel oder Metallpartikel enthält.

8. Batteriezelle nach einem der vorhergehenden Ansprüche, **dadurch gekennzeichnet, dass** die die aktive Masse (17) der positiven Elektrode enthaltende poröse Struktur (13) als Schicht ausgebildet und mit einem elektronisch leitenden ebenfalls schichtförmigen Substrat (12) der positiven Elektrode verbunden ist.

9. Batteriezelle nach Anspruch 8, **dadurch gekennzeichnet, dass** das Substrat der positiven Elektrode als offenporige Schicht, insbesondere in Form eines Metallschaums ausgebildet ist und das strukturbildende Material der die aktive Masse der positiven Elektrode enthaltenden porösen Struktur zumindest teilweise in das offenporige Substrat eindringt.

10. Batteriezelle nach einem der vorhergehenden Ansprüche, **dadurch gekennzeichnet, dass** die innere Oberfläche der die aktive Masse (17) der positiven Elektrode enthaltenden porösen Struktur (13) im Betrieb der Batteriezelle mit einer intraporösen Separatorschicht (25) bedeckt ist.

11. Batteriezelle nach Anspruch 10, **dadurch gekennzeichnet, dass** die intraporöse Separatorschicht (25) wenigstens teilweise in situ erzeugt wird.

12. Batteriezelle nach Anspruch 11, **dadurch gekennzeichnet, dass** die intraporöse Separatorschicht (25) durch eine Reaktion gebildet wird, an der ein Bestandteil des Elektrolyts der Zelle beteiligt ist.

13. Batteriezelle nach einem der Ansprüche 10 bis 12, **dadurch gekennzeichnet, dass** die intraporöse Separatorschicht (25) wenigstens teilweise durch Beschichten der inneren Oberfläche die aktive Masse der positiven Elektrode enthaltenden porösen Struktur (13) vor dem ersten Laden der Zelle (3) gebildet wird.

14. Batteriezelle nach Anspruch 13, **dadurch gekennzeichnet, dass** die intraporöse Separatorschicht (25) mittels eines ionenleitenden Glases, eines ionenleitenden keramischen Materials oder eines ionenleitenden Kunststoffes gebildet wird.

15. Batteriezelle nach einem der vorhergehenden Ansprüche, **dadurch gekennzeichnet, dass** das aktive Metall (24) der negativen Elektrode (5) ausgewählt ist aus der Gruppe bestehend aus den Alkalimetallen, den Erdalkalimetallen und den Metallen der zweiten Nebengruppe des Periodensystems.

16. Batteriezelle nach Anspruch 15, **dadurch gekennzeichnet, dass** das aktive Metall (24) der negativen Elektrode (5) Lithium, Natrium, Calcium, Zink oder Aluminium ist.

17. Batteriezelle nach einem der vorhergehenden Ansprüche, **dadurch gekennzeichnet, dass** das Substrat (12) der negativen Elektrode (5) zumindest teilweise aus einem deren aktives Metall speichernden Material besteht.

18. Batteriezelle nach einem der vorhergehenden Ansprüche, **dadurch gekennzeichnet, dass** die Poren (14) der die aktive Masse (17) der positiven Elektrode enthaltenden porösen Struktur (13) ein das aktive Metall der negativen Elektrode speicherndes Material (23) enthalten.

19. Batteriezelle nach einem der Ansprüche 17 oder 18, **dadurch gekennzeichnet, dass** das das aktive Metall speichernde Material ausgewählt ist aus der Gruppe bestehend aus Graphit, einer Interkalationsverbindung und einem mit dem aktiven Metall der negativen Elektrode legierenden Metall.

20. Batteriezelle nach einem der vorhergehenden Ansprüche, **dadurch gekennzeichnet, dass** die die aktive Masse (17) der positiven Elektrode enthaltende poröse Struktur (13) derartig eng an dem Substrat der negativen Elektrode (5) angeordnet ist, dass dazwischen keine Hohlräume vorhanden sind, in denen sich Ansammlungen von beim Laden der Zelle (3) aus der Elektrodenreaktion an der negativen Elektrode resultierendem aktivem Metall (24) in metallischer Form bilden können.

21. Batteriezelle nach einem der vorhergehenden Ansprüche, **dadurch gekennzeichnet, dass** sie an der Grenzfläche zwischen dem Substrat der negativen Elektrode (5) und der die aktive Masse der positiven Elektrode enthaltenden porösen Struktur Mittel enthält, durch die eine elektronische Leitung verhindert wird, die aber für das aus der Elektrodenreaktion an der negativen Elektrode beim Laden der Zelle resultierende aktive Metall passierbar sind.

22. Batteriezelle nach einem der vorhergehenden Ansprüche, **dadurch gekennzeichnet, dass** die aktive Masse (17) der positiven Elektrode (4) eine Metallverbindung, vorzugsweise ein Metalloxid, enthält.

23. Batteriezelle nach Anspruch 22, **dadurch gekennzeichnet, dass** die aktive Masse (17) der positiven Elektrode (4) ein Metalloxid eines Übergangsmetalls M, insbesondere eines Elementes der Ordnungszahlen 22 bis 28, enthält.

24. Batteriezelle nach einem der vorhergehenden Ansprüche, **dadurch gekennzeichnet, dass** die aktive Masse (17) der positiven Elektrode (4) eine Interkalationsverbindung enthält.

25. Batteriezelle nach einem der vorhergehenden Ansprüche, **dadurch gekennzeichnet, dass** der Elektrolyt (21) Schwefeldioxid enthält.

26. Batteriezelle nach einem der vorhergehenden Ansprüche, **dadurch gekennzeichnet, dass** das Volumen des Elektrolyts (21) in der Zelle (3) höchstens dem doppelten, bevorzugt höchstens dem einfachen freien Porenvolumen die die aktive Masse (17) der positiven Elektrode enthaltenden porösen Struktur (13) entspricht.

27. Batteriezelle nach einem der vorhergehenden Ansprüche, **dadurch gekennzeichnet, dass** der Elektrolyt ein Leitsalz enthält, welches ausgewählt ist aus der Gruppe bestehend aus den Halogeniden, Oxalaten, Boraten, Phosphaten, Arsenaten und Gallaten eines Alkalimetalls, insbesondere von Lithium.

28. Batteriezelle nach einem der vorhergehenden Ansprüche, **dadurch gekennzeichnet, dass** der Elektrolyt außer einem Leitsalz ein weiteres Salz, insbesondere ein Alkalihalogenid, bevorzugt ein Alkalifluorid und besonders bevorzugt Lithiumfluorid enthält.
